# EUROPEAN PATENT SPECIFICATION

(11) **EP 1 578 869 B1**
(45) Date of publication and mention of the grant of the patent: **05.08.2009**
(21) Application number: 03813152.0
(22) Date of filing: 15.12.2003
(51) Int. Cl.: C08L 95/00, E04D 5/02

(54) **BLOCK COPOLYMER MODIFIED BITUMINOUS FELTS AND THEIR USE**
BLOCKCOPOLYMER-MODIFIZIERTE BITUMENPAPPEN UND DEREN VERWENDUNG
FEUTRES DE BITUME MODIFIE A L'AIDE DE COPOLYMERE SEQUENCE ET LEUR UTILISATION

(30) Priority: 16.12.2002 EP 02028216
(43) Date of publication of application: 28.09.2005
(73) Proprietor: KRATON Polymers Research B.V., 1030 BH Amsterdam (NL)
(72) Inventor: Trommelen, Erik A.T., NL-1031 CM Amsterdam (NL); Damen, Jacques W.M., NL-1031 CM Amsterdam (NL); Van HEK, Jeffrey R., NL-1031 CM Amsterdam (NL)
(74) Representative: Kortekaas, Marcel C.J.A.
(86) International application number: PCT/EP2003/051005
(87) International publication number: WO 2004/055114

(56) References cited:
- EP-A- 0 853 103
- EP-A- 1 348 737
- WO-A-02/26889
- WO-A-02/44281

## Description

### Technical Field

The present invention relates to block copolymer modified bitumens, to felts, coatings, sealants and roads made from said block copolymer modified bitumens, and the use of said felts for roofing and for application in construction and/or building industry, e.g. bridge deck layers and protective layers for concrete, steel and/or other constructions.

More in particular the present invention relates to block copolymer modified bitumens which comprise a block copolymer of vinyl aromatic and conjugated diene and to felts made from them which can be of a significant smaller thickness as compared to the conventional felts without affecting the felt's functional performance.

### Description of Background Art

During the last two decades of the manufacture of block copolymer modified bituminous compositions, in particular for roofing, a clear trend has developed which aimed at using one or more block copolymers in bitumen, in actual weight proportions of up to 15 wt%, relative to the weight of the bitumen and block copolymer, while fillers were incorporated in actual weight proportions in the range of from 20 to 40 wt%, relative to the weight of the complete composition.

Such bituminous compositions were known from e.g. US patents nos. 4,405,680; 4,904,713; 5,051,457; 5,447,775; 5,308,676; 5,719,216; 5,854,335; 5,798,401 and 6,120,913.

As said block copolymers clearly formed and still form the most expensive elements of such modified bituminous compositions, there was no incentive at all for economical reasons to look for significantly increased proportions of such block copolymers.

On the other hand a clear economical need has developed to provide roofing felts and other protecting felts in the building industry, which can be applied as sole single felt, which should be able to form a adequate barrier against water e. g. rain water or ground water, which moreover can contain increasing amounts of corrosive agents (securing water tightness) instead of the commonly applied multilayer systems, and which should not increase the weight of the complete construction and in particular roofs.

EP1348737 concerns a bituminous composition which comprises a bituminous component and a block copolymer which comprises at least two blocks of a conjugated diene and at least two blocks of a monovinylaromatic hydrocarbon, being of the general formula: S1--B1-S2--B2 wherein B1 is a block of polymerized conjugated diene comprising at least 50 mole% isoprene having an apparent molecular weight of from 180,000 to 400,000, S1 and S2 are blocks of polymerized monovinylaromatic hydrocarbon having a weight average molecular weight of 12,000 to 40,000, and B2 is a block of polymerized conjugated diene comprising at least 50 mole% isoprene having an apparent molecular weight of from 15,000 to 60,000; wherein the weight ratio W of B1 over B2 is in the range of 3.0 to 12.0; and wherein the content of polymerized monovinylaromatic hydrocarbon is in the range from 10 to 35 %wt.

EP0853103 relates to bituminous compositions used for roofing and waterproofing membranes or material comprising asymmetrical linear polyvinyl aromatic-polydiene block copolymers having improved physical properties over broader ranges of service temperatures than those obtained from bituminous compositions prepared with symmetrical block copolymers of similar type. The asymmetry of the copolymer which is characterised by polyvinyl aromatic endblocks of at least two different molecular weights, one high and one low, ensures improved physical performance to roofing and waterproofing membranes made from such compositions.

Like EP1348737, this reference links all advantages which are achieved in the performance characteristics of the bituminous compositions to the structural particulars of the incorporated block copolymers and likewise fails to provide any explanation or illustration which would suggest or imply.

In neither reference a person skilled in the art would have found information suggesting a relationship between the proportion a relationship between the proportion of the block copolymers and the hardness of the bituminous composition, or a relationship between the service temperature and the proportion of the block copolymer.

It is therefore an object of the present invention to provide block copolymer modified bituminous compositions and felts derived from them, which meet the hereinbefore mentioned conditions.

Another object of the present invention is the use of such block copolymer modified bituminous felts in building and/or engineering industry in an economically improved way.

A further object of the present invention is the use of said improved block copolymer modified bituminous compositions in bituminous pavements. The structural elements of a typical bituminous pavement comprises the pavement foundation (made of sub-grade, that is the natural soil of fill material, and sub-base, usually formed of good quality granular material); the road base, made of dense or open bituminous material, and the surfacing, comprising a base course and a wearing course. The load-carrying capacity of a pavement is a function of both the thickness of the material and its stiffness. The thickness of the base course therefore depends on the use of the pavement.

It may vary from for instance 60 mm (cycle roads) to 180 mm and more (heavily loaded roads). Replacing e. g. the bituminous composition used for the base course of the surfacing by the composition of the present invention, provides, in a manner similar to the bituminous felts, economically improved base courses that are about 2/3rd of the ordinary thickness, whilst providing a well shaped surface on which to construct the wearing course as well as to distribute the traffic loads over the road base.

### Summary of the invention

As result of extensive research and experimentation, improved block copolymer bituminous compositions and felts and bituminous pavements derived from them, have surprisingly been found.

Accordingly, the invention relates to copolymer modified bituminous felts having a thickness of from 1 to 5 mm, comprising a bitumen and at least one block copolymer, comprising at least two poly (vinyl aromatic) blocks and at least one poly (conjugated diene) block in a weight proportion of more than 20 to 50 wt%, relative to the weight of the block copolymer and bitumen, and optionally at least one filler, in a weight proportion in the range of from 0 to 50 wt%, relative to the weight of the complete composition, wherein the respective weight proportions of block copolymer, bitumen and filler add up to 100%, as well as to the use of such block copolymer modified bituminous flets having a thickness of from 1 to 5 mm for roofing and application in construction and/or building industry.

### Detailed description of the invention

The invention is hereafter discussed in respect of the use in bituminous felts in particular, although it is to be understood that the improvement may be found in bituminous pavements as well. The bituminous compositions may also be used in bituminous sealants and coatings.

With the term"thin", as used throughout the present specification, is meant that the block copolymer modified bituminous felts or base courses of the present invention can have a thickness which is in average reduced by about 40% as compared to similar prior art bituminous felts or pavement component, while the relevant mechanical properties have been significantly improved into an excellent package.

More in particular the service temperature of said bituminous felts of the present invention have been found to be increased from e.g. 110°C to 170°C, the cold bend temperature has been found to be decreased from -30°C to -50°C or lower, while a high stiffness (walk-on-ability) was found in combination with an excellent low temperature flexibility.

It will be appreciated that such properties allow a substantial reduction in felt thickness without affecting the felt's functional performance requirements, i.e. sealing surfaces and securing water tightness.

This results in lower weight felts and potential significant economical advantages.

Moreover, the high level of copolymer modification will strengthen the service lifetime guarantee of critical performance indicators for protection against outside water, and in particular roofing applications.

It will be appreciated that the extra costs of the additional amounts of block copolymer in the bituminous compositions of the present invention will be much more than compensated by the surprisingly found advantages of the package of improved properties and the enabled use of significantly thinner felts.

As mentioned, similar advantages may be had when the composition is used in bituminous pavements, in particular the base course thereof, where reduction of thickness and increase in service temperature range is similarly appreciated.

The vinyl aromatic monomer to be incorporated into the block copolymer may be selected from styrene; o-methyl styrene; p-methyl styrene; p-tert-butyl styrene; 2,4-dimethylstyrene; alpha-methyl-styrene; vinyl naphthalene; vinyl toluene and vinyl xylene or mixtures thereof. A preferred vinyl aromatic monomer is styrene as substantially pure homomonomer or as main monomers, mixed with minor proportions (at most 10 wt%) of one or more of the other structurally related vinyl aromatic monomer(s) as specified hereinbefore, or with minor proportions of a comonomer (e.g. butadiene or isoprene). The use of substantially pure styrene is most preferred.

The conjugated diene monomer can be selected from butadiene; isoprene; 2,3-dimethyl 1,3-butadiene; 1,3-pentadiene, 1,3-hexadiene and mixtures thereof. Preferred conjugated diene comonomers are butadiene or isoprene or mixtures thereof. Said mixtures of butadiene and isoprene can be copolymerized into a central block, comprising individual homopolymer blocks of poly(butadiene) and poly(isoprene) or one sole substantially random copolymerized block, having average homopolymer block lengths of less than 100 monomer units and preferably of less than 20 monomer units. A more preferred conjugated diene comonomer is butadiene, which can be used as substantially pure comonomer alone (content more than 99%), or as main monomer, mixed with minor proportions (at most 10 wt%) of one or more of the hereinbefore specified structurally related conjugated diene monomer or with minor proportions of a vinyl aromatic comonomer such as styrene. The use of a substantially pure butadiene is preferred.

The block copolymers may be either linear or radial and will preferably have apparent total molecular weights in the range of from 40,000 to 500,000 and more preferably from 60,000 to 200,000.

It will be appreciated that the main linear triblock copolymers or radial block copolymers may also comprise relatively minor amounts of accompanying diblock copolymers, comprising the same poly(vinyl aromatic) block, and a poly(conjugated diene block) of an apparent molecular weight, being the half of the molecular weight of the central block poly(conjugated diene block) in a triblock and resulting from the manufacture of said triblock copolymer or radial block copolymer by coupling initially prepared living diblock copolymers with a coupling agent, as illustrated in e.g. US patents nos. 3,231,635; 3,251,905; 3,390,207; 3,598,887 and 4,219,627 and EP patent applications nos. 0413294A2; 0387671A1; 0636654A1 and WO 04/22931, the disclosures of which have been incorporated herein by reference.

The diblock content can be in the range of from 0 to 90 wt% and preferably from 0 to 35 wt%, and more preferably from 0 to 20 wt%, relative to the total weight of block copolymer(s).

The 1,2-addition during the polymerization of conjugated diene and preferably butadiene (vinyl content) is generally in the range of from 5 to 65 mole%, preferably in the range of from 8 to 45 and more preferably from 8 to 25 mole%.

The block copolymers may have bound vinyl aromatic monomer contents in the range of from 15 to 50 % and more preferably from 25 to 45 % and will have a linear triblock structure or radial structure (S-B-S or (SB)ₙ-X). More preferred block copolymers are linear triblock (S-B-S) copolymers.

Examples of suitable block copolymers to be used according to the present invention are KRATON D1101, the road paving benchmark grade , KRATON D1102, a low molecular weight, linear block copolymer for a low melt viscosity, KRATON D 1116 A radial, low styrene block copolymer for blends with a higher butadiene requirement , KRATON D1118, a high di-block containing granular polymer, also for use in combination with vulcanisation agents such as sulphur, KRATON D1186 and KRATON D1184, which are the main grades for roofing felts, KRATON D1192, a grade with lower PMB viscosity, high compatibility and good ageing performance, KRATON KX219 and KRATON KX220 block copolymers (KRATON is a registered trademark). In roofing felts also isoprene based styrenic block copolymers are used, to formulate self-adhesive felts. Block copolymers may be had from suppliers such as Polimeri Europa; Dynasol; Dexco; Fina; Chi Mei; Asahi; Taiwan Synthetic Rubber Company; Kumho; LCY and Yue Yang and others, that supply grades similar to the aforementioned KRATON grades.

It will be appreciated that the applied block copolymers may also have been selectively hydrogenated, which means that the poly(conjugated diene) central block(s) may have been fully or partially hydrogenated (residual unsaturation less than 25% of the original unsaturation), whereas the poly(vinyl aromatic) blocks have not been hydrogenated, e.g. as known from US patents nos. 3,113,986; 4,226,952; 5,039,755 and Reissue no. 27145, the disclosures of which are herein incorporated by reference.

The use of said hydrogenated block copolymers (S-EB-S or [S-EB]ₙ-X) will provide as additional advantageous feature, that no protecting agent on the block copolymer modified bituminous felt upper surface will be necessary, such as slate chippings and the like.

Examples of said block copolymers are KRATON G1650, G1652 and G1654 block copolymers. Other suppliers include Dynasol, Kuraray, Asahi, and Taiwan Synthetic Rubber Company.

In preferred block copolymer modified bituminous compositions of the present invention, the weight proportion of block copolymers will be in the range of from more than 20 to 40 wt%, relative to the weight of the bitumen and block copolymer.

The bitumen can be selected from naturally occurring bitumens or bitumens derived from mineral oil. Also petroleum pitches obtained by a cracking process and coal tar can be used as the bituminous component, as well as blends of various bituminous materials.

Examples of suitable components include distillation or "straight-run bitumens". Precipitation bitumens, e.g. propane bitumens, blown bitumens, e.g. catalytically blown bitumen or "multiphalte", and mixtures thereof.

Other suitable bituminous components include mixtures of one or more of these bitumens with extenders (fluxes) such as petroleum extracts, e.g. aromatic extracts, distillates or residues, or with oils.

Suitable bituminous components (e.g. either "straight-run bitumens" or "fluxed bitumens") are those having a penetration in the range of from 10 to 350 dmm at 25°C (as measured according to ASTM D5, lower values indicate harder bitumen). In typical bituminous pavements, bitumens having a penetration in the range of from 40 to 150 dmm at 25°C are preferred. Depending on the climate and the intended use, in some base courses bitumen with a penetration down to 10 dmm may be used. On the other hand, in typical roofing felts bitumens are preferred that have a penetration in the range of from 100 to 300 dmm at 25°C.

It is the advantage of the present invention that now bitumens may be used that would normally be considered too hard. Accordingly, preferably quite hard bitumens of a penetration of from 10 to 100 dmm and more preferably from 30 to 80 dmm may be used.

The block copolymer modified bituminous compositions of the present invention may also comprise other ingredients that may be required due to the specific end-use envisaged.

Said other ingredients may be flame retarders, stabilizers, anti-statics, resins, oils, occurring in weight proportions in the range of from 0 to 15 wt%, relative to the weight of block copolymer and bitumen.

Fillers are included such as talc, calcium carbonate, carbon black fly ash, slate dust, limestone, dolomite and siliceous fillers such as clay, mica and other sheet silicates or mixtures of said fillers. In bituminous pavements, aggregate and sand is used.

The block copolymer modified bituminous compositions of the present invention may be prepared by various methods.

The block copolymer and bitumen can be blended at an elevated temperature, preferably not higher than 190°C for unhydrogenated block copolymers and not higher than 230°C for hydrogenated block copolymers, in conventional high shear blenders such as a ribbon blender, a drum mixer, where after the filler can be mixed in, wherein lower molecular weight block copolymers have been included.

For compositions wherein relatively higher molecular weight block copolymers have been included, blending of block copolymer with bitumen may be carried out by calendaring, in a Branbury internal mixer or any other means known to be used for blending high viscous compositions.

It will be appreciated that the block copolymer modified bituminous felts of the present invention will have a thickness of from 1 to 5 mm; preferably from 1.5 to 2.5 mm for roofing felts and from 2.5 to 3.5 mm for bridge deck layers.

Said modified bituminous felts may be applied as one single layer and are therefore significantly cheaper than conventional felts and/or multilayer systems.

The block copolymer modified bituminous felts of the present invention have a service temperature of from -35°C or lower.

The new bituminous pavements may have base courses of about 40 mm thickness, whilst maintaining the properties of an ordinary base course of 60 mm thickness.

The following examples illustrate the present invention, however without restricting its scope to these specific embodiments.

### Examples

Several block copolymers and bitumen grades were mixed in a SILVERSON LR2 high shear mixer in weight proportions as specified in the following table. The bitumen was heated to 160°C and subsequently the block copolymers were added. During polymer addition the temperature was kept under 180°C. Blending was continued until a homogeneous blend was obtained. A filler, if any, was added under mixing.

### Conclusion

The block copolymer modified bitumen compositions of Examples I and III (vs. comparative Examples II and IV) exhibit an outstanding balance between high stiffness (low Pen at 50°C) and excellent Low Temperature performance. This results in a superb Service Temperature range. Moreover, the novel compositions maintain their low Cold Bend property even if use is made of (cheap) filler. Examples V and VI demonstrate that the invention is not limited to a specific block copolymer of bitumen.

Although not demonstrated here, the new block copolymer modified bituminous compositions may be used in other end-uses as well

| Example | I | | III(a) | III(b) | | | V | VI |
|---|---|---|---|---|---|---|---|---|
| Comparative Example | | II | | | IV (a) | IV(b) | | |
| Bitumen B45/60, %wt | 75 | 88 | | | | | 75 | |
| Bitumen PX-60 , %wt | | | 75 | 75 | 88 | 88 | | |
| Bitumen B-160 , %wt | | | | | | | | 75 |
| Filler, %wt on total | | | | 35 | | 35 | | |
| Block copolymer A, %wt | 25 | 12 | 25 | 25 | 12 | 12 | | 25 |
| Block copolymer B, %wt | | | | | | | 25 | |
| | | | | | | | | |
| Properties of compositions | | | | | | | | |
| Softening point R&B, °C | 140 | 112 | 139 | 139 | 110 | 111 | 112 | 145 |
| Pen at 25°C, dmm | 25 | 31 | 18 | 18 | 32 | 23 | 21 | 32 |
| Pen at 50°C, dmm | 48 | 96 | 44 | 44 | 104 | 87 | 50 | 63 |
| Cold Bend, pass °C | -50 | -15 | -50 | -50 | -30 | -25 | -50 | -50 |
| DIN Flow, pass °C | 120 | 90 | 120 | 120 | 85 | 85 | 90 | 135 |
| Service temperature range, °C | 170 | 105 | 170 | 170 | 125 | 120 | 140 | 185 |

The test methods used were:
- Viscosity: evaluated at 180°C using a Haeke roto- viscosimeter, using a shear rate of 20 s-1 and 100 s-1
- Cold bend: according to UEAtc M. O. A. T. no. 31; 1984,
- Flow Resistance Temperature: according to DIN 52123; Aug. 1985,
- Service temperature range: the difference between (I) the DIN Flow, pass in °C, and (II) the Cold Bend, pass in °C
- Softening point R & B: according to ASTM D36, corrected for stirring with +1. 5 °C,
- Penetration: at 25°C or 50°C according to ASTM D5-94.

The bitumen. grades used for the listed examples were compatible bitumens:
- PX-60 bitumen is a mixture of 81 wt% of propane bitumen ex-Phillipines (Pililla, TMC no. 26260) +19 wt% of Bright Furfural Extract (BFE, aromatic oil/flux, TMC no. 24206), showing a penetration of 60 dmm at 25°C.
- B45/60 is a bitumen obtained by vacuum distillation of Venezuelan crude oil (in ESHA refinery, Amsterdam), having a penetration of 50 dmm at 25°C.
- B-160 is a bitumen obtained by vacuum distillation of Middle East crude oil supplied by SIPLAST (TOTAL), showing a penetration of 160 dmm at 25°C.

Block copolymer A is a triblock copolymer, comprising poly (styrene) blocks and a poly (butadiene) block, having a PSC of 31 wt%, a total molecular weight of 171,000, a vinyl content of 8 mole% and a coupling efficiency of 80%.

Block copolymer B is a triblock copolymer, comprising poly (styrene) blocks and a poly (butadiene) block, having a PSC of 29.5 wt%, a total molecular weight of 127,000 (measured by Gel Permeation Chromatography and expressed in terms of standard poly (styrene) ), a coupling efficiency of 84% and a vinyl content of 8 mole%.

As filler was used either WIGRO 60K or Betocarb P2 limestone (WIGRO and Betocarb are trademarks).

## Claims

1. Block copolymer modified bituminous felts having a thickness of from 1 to 5 mm, comprising a bitumen and at least one block copolymer, comprising at least two poly (vinyl aromatic) blocks and at least one poly (conjugated diene) block, in a weight proportion of from more than 20 to 50 wt%, relative to the weight of the block copolymer and bitumen and optionally at least one filler, in a weight proportion in the range of from 0 to 50 wt%, relative to the weight of the complete composition, wherein the respective weight proportions of block copolymer, bitumen and filler add up to 100%.

2. Block copolymer modified bituminous felts according to claim 1, wherein the weight proportions of block copolymer is in the range of from more than 20 to 40 wt%, relative to the weight of the block copolymer and bitumen.

3. Block copolymer modified bituminous felts according to claims 1 and 2, having a service temperature of from 140-200°C and a cold bend temperature of from -35°C or lower, wherein the service temperature is the difference between (I) the DIN Flow, pass in °C, and (II) the Cold Bend, pass in °C, wherein (I) the DIN Flow is measured according to DIN 52123 of August 1985 and (II) the Cold Bend is measured according to UEA tc M.O.A.T. no. 31 of 1984.

4. Block copolymer modified bituminous felts according to claim 1, wherein the block copolymer is a linear triblock copolymer S-B-S, optionally mixed with diblock S-B, wherein each S independently represents poly (styrene) and each B independently represents poly (butadiene) and wherein the diblock copolymer occurs in a weight proportion of from 0 to 35 wt%.

5. Block copolymer modified bituminous felts according to claim 1, wherein the bound poly (vinyl aromatic) content in the block copolymer is in the range of from 25 to 45 wt%.

6. Block copolymer modified bituminous felts according to claim 1, wherein the 1,2-addition in the conjugated diene polymerization is in the range of from 5 to 65 mole% and preferably from 8 to 45 mole%.

7. Block copolymer modified bituminous felts according to claim 1, having a thickness of from 1.5 to 2.5 mm if they are envisaged as roofing felts, or from 2.5 to 3.5 mm if they are envisaged as bridge deck layers.

8. Use of block copolymer modified bituminous felts having a thickness of from 1 to 5 mm according to claims 1-7 for roofing and application in construction and/or building industry.

## Patentansprüche

1. Blockcopolymermodifizierte Bitumenpappen mit einer Dicke von 1 bis 5 mm, umfassend ein Bitumen und wenigstens ein Blockcopolymer, umfassend wenigstens zwei poly(vinyl)aromatische Blöcke und wenigstens einen Poly(konjugiertes Dien)block, in einem Gewichtsanteil von mehr als 20 bis 50 Gewichts-% in Bezug auf das Gewicht des Blockcopolymers und des Bitumens, und gegebenenfalls wenigstens einen Füllstoff in einem Gewichtsanteil im Bereich von 0 bis 50 Gewichts-% in Bezug auf das Gewicht der vollständigen Zusammensetzung, worin die entsprechenden Gewichtsanteile von Blockcopolymer, Bitumen und Füllstoff sich auf 100 % summieren.

2. Blockcopolymermodifizierte Bitumenpappen nach Anspruch 1, worin die Gewichtsanteile des Blockcopolymers im Bereich von mehr als 20 bis 40 Gewichts-% in Bezug auf das Gewicht des Blockcopolymers und des Bitumens liegen.

3. Blockcopolymermodifizierte Bitumenpappen nach Anspruch 1 und 2 mit einer Gebrauchstemperatur von 140-200 °C und einer Kaltbiegetemperatur von -35 °C oder weniger, wobei die Gebrauchstemperatur der Unterschied zwischen (I) dem DIN-Fluss, passiert in °C, und (II) dem Kaltbiegen, passiert in °C, ist, wobei (I) der DIN-Fluss gemäß DIN 52123 vom August 1985 und (II) das Kaltbiegen gemäß UEA tc M.O.A.T. Nr. 31 von 1984 gemessen wird.

4. Blockcopolymermodifizierte Bitumenpappen nach Anspruch 1, worin das Blockcopolymer ein lineares Triblockcopolymer S-B-S gegebenenfalls gemischt mit einem S-B-Diblock ist, worin jedes S unabhängig voneinander Poly(styrol) darstellt und jedes B unabhängig voneinander Poly(butadien) darstellt und worin das Diblockcopolymer in einem Gewichtsanteil von 0 bis 35 Gewichts-% vorkommt.

5. Blockcopolymermodifizierte Bitumenpappen nach Anspruch 1, worin der gebundene poly(vinylaromatische) Gehalt in dem Blockcopolymer im Bereich von 25 bis 45 Gewichts-% liegt.

6. Blockcopolymermodifizierte Bitumenpappen nach Anspruch 1, worin die 1,2-Addition in der Polymerisation des konjugierten Diens im Bereich von 5 bis 65 Mol-% und vorzugsweise von 8 bis 45 Mol-% liegt.

7. Blockcopolymermodifizierte Bitumenpappen nach Anspruch 1 mit einer Dicke von 1,5 bis 2,5 mm, wenn sie Dachpappen sein sollen, oder von 2,5 bis 3,5 mm, wenn sie Brückenbodenbeläge sein sollen.

8. Verwendung blockcopolymermodifizierter Bitumenpappen mit einer Dicke von 1 bis 5 mm nach den Ansprüchen 1-7 für Dachbelagsanwendungen und Anwendungen in der Konstruktion und/oder der Bauindustrie.

## Revendications

1. Feutres bitumés modifiés par copolymère séquencé ayant une épaisseur de 1 à 5 mm, comprenant un bitume et au moins un copolymère séquencé, comprenant au moins deux séquences poly(vinyle aromatique) et au moins une séquence poly(diène conjugué), en une proportion en poids de plus de 20 à 50 % en poids, par rapport au poids du copolymère séquencé et du bitume et éventuellement au moins une charge, en une proportion en poids dans la plage de 0 à 50 % en poids par rapport au poids de la composition complète, dans lesquels la somme des proportions en poids respectives du copolymère séquencé, du bitume et de la charge est égale à 100 %.

2. Feutres bitumés modifiés par copolymère séquencé selon la revendication 1, dans lesquels les proportions en poids du copolymère séquencé se situent dans la plage allant de plus de 20 à 40 % en poids, par rapport au poids du copolymère séquencé et du bitume.

3. Feutres bitumés modifiés par copolymère séquencé selon les revendications 1 et 2, ayant une température de service de 140 à 200 °C et une température de pliage à froid de -35 °C ou moins, dans lesquels la température de service est la différence entre (1) l'écoulement DIN en °C, et (II) le pliage à froid, en °C, dans lesquels (I) l'écoulement DIN est mesuré selon la norme DIN 52123 d'août 1985 et (II) le pliage à froid est mesuré selon UEA tc M.O.A.T. n° 31 de 1984.

4. Feutres bitumés modifiés par copolymère séquencé selon la revendication 1, dans lesquels le copolymère séquencé est un copolymère triséquence linéaire S-B-S, éventuellement mélangé avec une diséquence S-B, où chaque S représente indépendamment le poly(styrène) et chaque B représente indépendamment le poly(butadiène) et où le copolymère diséquencé est présent en une proportion en poids de 0 à 35 % en poids.

5. Feutres bitumés modifiés par copolymère séquencé selon la revendication 1, dans lesquels la teneur en poly(vinyle aromatique) lié dans le copolymère séquencé se situe dans la plage de 25 à 45 % en poids.

6. Feutres bitumés modifiés par copolymère séquencé selon la revendication 1, dans lesquels l'addition 1,2 dans la polymérisation de diène conjugué est dans la plage de 5 à 65 % en mole et de préférence de 8 à 45 % en mole.

7. Feutres bitumés modifiés par copolymère séquencé selon la revendication 1, ayant une épaisseur de 1,5 à 2,5 mm s'ils sont envisagés en tant que feutres pour toiture, ou de 2,5 à 3,5 mm s'ils sont envisagés en tant que couches de tablier de pont.

8. Utilisation de feutres bitumés modifiés par copolymère séquencé ayant une épaisseur de 1 à 5 mm selon les revendications 1 à 7 pour la toiture et application dans l'industrie de la construction et/ou du bâtiment.
